(19) Europäisches Patentamt / European Patent Office / Office européen des brevets

(11) **EP 3 822 546 A1**

(12) **EUROPÄISCHE PATENTANMELDUNG**

(43) Veröffentlichungstag:
**19.05.2021   Patentblatt 2021/20**

(51) Int Cl.:
**F24D 19/10** *(2006.01)*     **F24H 1/00** *(2006.01)*
**F24H 7/00** *(2006.01)*      **F24H 9/20** *(2006.01)*
**F28D 20/00** *(2006.01)*     **G06Q 50/06** *(2012.01)*

(21) Anmeldenummer: **20207337.5**

(22) Anmeldetag: **13.11.2020**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **14.11.2019   AT 509862019**

(71) Anmelder: **Austria Email AG
8720 Knittelfeld (AT)**

(72) Erfinder: **STOCKER, Frank
8740 Zeltweg (AT)**

(74) Vertreter: **Sonn & Partner Patentanwälte
Riemergasse 14
1010 Wien (AT)**

(54) **ENERGIESPEICHER UND VERFAHREN ZUM BETRIEB EINES ENERGIESPEICHERS**

(57)   Energiespeicher (1) und Verfahren zum Betrieb eines Energiespeichers (1), insbesondere eines Warmwasserspeichers (2), wobei der Energiespeicher (1) einen vorzugsweise wärmeisolierten Aufnahmeraum (5) zur Aufnahme einer Flüssigkeit, eine Zuleitung (3) sowie eine Ableitung (4) für die Flüssigkeit, eine Wärmeenergiezuführeinrichtung (8) und eine Temperaturmesseinrichtung (10) zur Bestimmung der Temperatur der Flüssigkeit aufweist, wobei in dem Energiespeicher (1) durch Zuführen von Wärmenergie ein erster Energieinhalt (21) gespeichert und mit Hilfe der Wärmeenergiezuführeinrichtung (8) und einer ersten Regelungseinrichtung (22) im Wesentlichen gehalten wird und der Energiespeicher (1) einer Anwendung (24) bis zu einer Beladungsgrenze (23) als Energiesenke zur Verfügung gestellt wird.

Fig.1

EP 3 822 546 A1

**Beschreibung**

Die Erfindung betrifft einen Energiespeicher und ein Verfahren für den Betrieb eines Energiespeichers, insbesondere eines Warmwasserspeichers, wobei der Energiespeicher einen vorzugsweise wärmeisolierten Aufnahmeraum zur Aufnahme einer Flüssigkeit, eine Zuleitung sowie eine Ableitung für die Flüssigkeit, eine Wärmeenergiezuführeinrichtung und eine Temperaturmesseinrichtung zur Bestimmung der Temperatur der Flüssigkeit aufweist.

Energiespeicher der eingangs erwähnten Art werden typischerweise in Haushalten zum Aufbereiten und Speichern von Warmwasser eingesetzt. Das Zuführen von Wärmeenergie wird im Allgemeinen als Beladen des Energiespeichers bezeichnet. Zum Betrieb eines solchen Energiespeichers sind aus dem Stand der Technik unterschiedliche Betriebsarten bzw. Beladungsstrategien bekannt, wie im Folgenden dargelegt wird.

Bei einer häufig verwendeten Betriebsart wird das Wasser im Aufnahmeraum mit Hilfe der Wärmeenergiezuführeinrichtung innerhalb eines bestimmten Temperaturintervalls - der sogenannten Temperaturhysterese - gehalten. Sobald die Temperatur des im Aufnahmeraum befindlichen Wassers unter eine einstellbare Mindesttemperatur (dem unteren Schwellwert) fällt, wird das Wasser im Aufnahmeraum bis zu einem oberen Schwellwert wieder erwärmt (Hystereseregelung). Da Wärmeverluste trotz Wärmeisolierung unvermeidbar sind, muss, auch wenn über einen längeren Zeitraum keine Warmwasserentnahme stattgefunden hat, nach einer gewissen Zeit wieder Wärmeenergie zugeführt werden.

Wirtschaftlich betrachtet ist diese Betriebsart relativ ineffizient, da der Energiespeicher sich dauerhaft in einem hohen Beladungszustand befindet, allerdings meist über längere Zeiträume keine oder nur kleine Warmwassermengen aus dem Energiespeicher entnommen werden. Nur zu bestimmten Zeiten und in größeren Haushalten, beispielsweise abends in einem Mehrpersonenhaushalt, wird die zur Verfügung stehende Menge an Warmwasser auch tatsächlich genutzt.

Um einen Warmwasserspeicher wirtschaftlicher zu betreiben, kann vorgesehen sein, den Energiespeicher nur in der Nacht zu beladen, da zu dieser Zeit oftmals von Energieversorgungsunternehmen günstigere Stromtarife angeboten werden. Bei dieser Betriebsart findet demnach eine zeitliche Verschiebung der Beladung des Energiespeichers statt. Durch die Wärmeverluste und die Warmwasserentnahmen nimmt der Beladungszustand des Warmwasserspeichers im Laufe des Tages ab. Das volle Energiepotential des Warmwasserspeichers wird daher nur zum Zeitpunkt der Beladung ausgenutzt. Nachteilig bei dieser Betriebsart ist zudem, dass, sofern eine Beladung des Energiespeichers ausschließlich nachts erfolgen soll, dies den Komfort eines Verbrauchers erheblich einschränken kann, wenn tagsüber mehr Warmwasser benötigt wird, als der Energiespeicher bevorraten kann.

Aus der WO 2013/124302 A2 ist eine weitere Betriebsart für einen Warmwasserspeicher bekannt. Hierbei wird das Nutzverhalten von Verbrauchern auf Basis von entnommenen Warmwassermengen analysiert und der Energiespeicher entsprechend dieser Analyse prädikativ beladen, sodass zu jenen Zeiten, in denen der Nutzer üblicherweise Warmwasser entnimmt, auch eine entsprechende Menge an Warmwasser zur Verfügung steht. Diese Betriebsart ermöglicht einen auf das Verbraucherverhalten abgestimmten Betrieb. Allerdings wird das Energiepotential des Energiespeichers ebenfalls, ähnlich wie bei dem oben beschriebenen Nachtbetrieb, die meiste Zeit nicht ausgenutzt, da zu den auf Basis der Analyse ermittelten Zeiten nur jene Warmwassermenge bevorratet wird, welche auch voraussichtlich benötigt wird.

Weitere Wärmespeicher sind aus DE 10 2012 212 040 A1 und WO 2011/058383 A2 bekannt. DE 10 2012 212 040 A1 offenbart einen Verbund aus mehreren Warmwasserspeichern. Die WO 2011/058383 A2 betrifft Latentwärmespeicher.

Es kann festgestellt werden, dass, wenn Warmwasserspeicher effizient betrieben werden, die Warmwasserspeicher für die meisten Warmwasserentnahmevorgänge überdimensioniert sind und das zur Verfügung stehende Energiepotential des Energiespeichers daher die meiste Zeit nicht genutzt wird.

Es ist daher Aufgabe der vorliegenden Erfindung, die Nachteile des Standes der Technik zu lindern oder gar gänzlich zu beseitigen. Insbesondere ist es Aufgabe der vorliegenden Erfindung, das zur Verfügung stehende Energiepotential eines Energiespeichers ohne Nachteil für den Verbraucher auszunutzen.

Gelöst wird diese Aufgabe durch ein Verfahren mit den Merkmalen des Anspruch 1.

Erfindungsgemäß ist daher vorgesehen, dass in dem Energiespeicher durch Zuführen von Wärmenergie ein erster Energieinhalt gespeichert und der erste Energieinhalt mit Hilfe der Wärmeenergiezuführeinrichtung und einer ersten Regelungseinrichtung gehalten wird und der Energiespeicher einer Anwendung bis zu einer Beladungsgrenze als Energiesenke zur Verfügung gestellt wird. Vorteilhafterweise kann dadurch das Energiepotential des Energiespeichers sinnvoll ausgenutzt werden, ohne den Komfort eines Verbrauchers einzuschränken, da zumindest der erste Energieinhalt in dem Energiespeicher bevorratet wird. Der (momentane) Energieinhalt des Energiespeichers wird dabei durch die erste Regelungseinrichtung derart geregelt, dass zumindest ein Energieinhalt in der Höhe des ersten Energieinhalts in dem Energiespeicher gespeichert wird. Vorzugsweise wird zur Bestimmung des (momentanen) Energieinhalts des Energiespeichers das Flüssigkeitsvolumen im Aufnahmeraum in Bereiche oder Messzonen unterteilt. Bei der Bestimmung des Energieinhalts für die Regelung des ersten Energieinhalts werden bevorzugt nur Bereiche des im Aufnahmeraum befindlichen Flüssigkeitsvolumens berücksichtigt, in denen die Flüssigkeit eine Temperatur von zumindest 40 °C, insbesondere zumindest 45 °C oder zumindest 50 °C, aufweist. Dies deshalb, weil eine Flüssigkeit mit einer solchen Temperatur für einen Verbraucher nutzbar ist. Mit anderen Worten werden vorzugsweise die Energieinhalte von Bereichen, in denen die Flüssigkeit eine geringere Temperatur als 50 °C, 45 °C oder 40°C aufweist, nicht bei der Regelung des ersten Energieinhalts berücksichtigt. Der erste Energieinhalt kann beispielsweise ein Energieinhalt sein, der einem Verbraucher stets zur Verfügung stehen soll (beispielsweise für ein Vollbad oder einen Duschvorgang), während der Energiespeicher bis zur Beladungsgrenze einer Anwendung zur Verfügung gestellt wird. Der erste Energieinhalt kann somit der Wahrung von Eigeninteressen eines Verbrauchers (Benutzer) dienen, während ein weiterer Energieinhalt bis zur Beladungsgrenze als Energiesenke nach Maßgabe der Anwendung genutzt wird. Der weitere Energieinhalt stellt vor belaudung durch die Anwendung ein Beladungspotential dar, ist also noch nicht in den Energiespeicher geladen und kann somit zum Beladen mit Energie genutzt werden. Vorzugsweise ist die Höhe des ersten Energieinhalts veränderbar, d.h. einstellbar. Der erste Energieinhalt kann jederzeit durch Zapfung entnommen werden. Es kann dabei auch vorgesehen sein, dass der erste Energieinhalt für bestimmte Zeiträume einen anderen Wert annimmt. Beispielsweise kann der erste Energieinhalt in den Nachtstunden, in denen üblicherweise keine Warmwasserentnahme erfolgt, reduziert werden ("thermische Nachtabsenkung"). Aber auch der weitere Energieinhalt kann, sofern durch die Anwendung eine Beladung stattgefunden hat, ebenfalls entnommen werden. Einem Verbraucher steht aber zumindest der erste Energieinhalt zur Verfügung. Wenn in dem Energiespeicher der erste Energieinhalt unterschritten wird, wird über die erste Regelungseinrichtung und die Wärmeenergiezuführeinrichtung der erste Energieinhalt wieder aufgefüllt. Der erste Energieinhalt wird somit von der Regelungseinrichtung gehalten. Unter "halten" ist in diesem Zusammenhang demnach zu verstehen, dass der erste Energieinhalt in dem Aufnahmeraum bevorratet wird und bei Unterschreitung des ersten Energieinhalts Energie zugeführt wird, bis wieder Energie in der Höhe des ersten Energieinhalts in dem Energiespeicher vorhanden ist. Bei Wärmeverlusten oder Warmwasserentnahme wird durch die erste Regelungseinrichtung und die Wärmeenergiezuführeinrichtung somit Energie zugeführt, bis der erste Energieinhalt wieder gespeichert ist. Die Regelungseinrichtung kann durch einen Mikroprozessor oder einen Teil eines Mikroprozessors gebildet sein. Insbesondere kann die Regelungseinrichtung eine Hystereseregelung durchführen. Dabei wird der erste Energieinhalt zumindest zwischen einem oberen und einem unteren Energieschwellwert gehalten. Energieinhalte des Energiespeichers können mittels der Formel

$$E = c * m * (T - T_0) \qquad (1)$$

bestimmt werden, wobei E eine Energie, c die spezifische Wärmekapazität einer Flüssigkeit, m die Masse der Flüssigkeit, T die Temperatur der Flüssigkeit und $T_0$ eine Bezugstemperatur bedeuten. Die Bezugstemperatur kann zum Beispiel der Temperatur des Frischwassers der Zuleitung, beispielsweise 15°C, entsprechen. Mit den entsprechenden Zahlenwerten für Wasser (spezifische Wärmekapazität c = 4 190 J/kgK, Dichte $\rho$ = m/V = 1000 kg/m³) lässt sich die Formel umschreiben auf

$$E = 1{,}163 \frac{kWh}{Km^3} * V * (T - T_0), \qquad (2)$$

wobei V das Volumen des Mediums bedeutet und die Energie E in der Einheit kWh berechnet wird. Je nach Art des zu bestimmenden Energieinhalts können unterschiedliche Bezugstemperaturen verwendet werden. Für die Bestimmung eines momentanen Gesamtenergieinhalts kann beispielsweise die Temperatur des einlaufenden Frischwassers oder ein Schätzwert bzw. ein Erfahrungswert hierfür herangezogen werden. Für die Regelung des ersten Energieinhalts ist es günstig, wenn zur Bestimmung des (momentanen) Energieinhalts des Energiespeichers eine Bezugstemperatur von zumindest 40 °C herangezogen wird. Alternativ oder zusätzlich können Energieinhalte über durch die Ableitung abfließende Wärmemenge und/oder durch die Wärmeenergiezuführeinrichtung zugeführte Wärmemenge durch Bilanzierung ermittelt werden. Zu diesem Zweck können in der Zuleitung und/oder in der Ableitung Sensoren zur Erfassung der zugeführten/abgeführten Energiemenge, beispielsweise Durchflusssensoren und Temperatursensoren, angeordnet sein. Bei der Anwendung kann es sich zum Beispiel um eine elektrotechnische Vorrichtung, die einen Überschuss an Energie produzieren und abgeben kann, oder eine Applikation, vorzugsweise eine Computer- oder Smartphone-Applikation, insbesondere ein Steuerungsprogramm, für eine elektrotechnische Vorrichtung handeln. Beispielsweise kann es sich bei der Anwendung um eine Photovoltaikanlage, eine Windkraftanlage, ein elektrisches Energieversorgungsnetz oder eine Applikation, insbesondere ein Steuerungsprogramm, hierfür handeln. Im Folgenden werden die Vorteile des erfindungsgemäßen Verfahrens in Zusammenhang mit einem elektrischen Energieversorgungsnetz näher erläutert. Das Verfahren ist jedoch nicht auf die Anwendung mit einem Energieversorgungsnetz beschränkt. In einem Energieversorgungsnetz sollen sich zu jedem Zeitpunkt der Bedarf an Energie und die Menge an zur Verfügung stehender Energie decken. Über- oder Unterangebote an Energie müssen daher kompensiert werden. Da zunehmend mehr Energieerzeuger, wie zum Beispiel Windräder oder Photovoltaikanlagen (die meist dezentral ins Energieversorgungsnetz eingespeist werden), schwankende Leistungen liefern, muss bei einem Überangebot Energie aus dem Energieversorgungsnetz entnommen und gespeichert bzw. verbraucht werden. Auch bei einem Unterangebot an Energie müssen entsprechende Maßnahmen getroffen werden. Dies kann mit Hilfe des erfindungsgemäßen Verfahrens und dem erfindungsgemäßen Energiespeicher erfolgen. Dabei wird der Energiespeicher der Anwendung bis zu einer Beladungsgrenze zur Verfügung gestellt und dient somit als Energiesenke. Zum Beladen mit thermischer Energie durch die Anwendung wird die Wärmeenergiezuführeinrichtung aktiviert. Bei einer elektrischen Wärmeenergiezuführeinrichtung wird dabei elektrische Energie in thermische Energie umgewandelt. "Energiesenke" bedeutet in diesem Zusammenhang, dass Energie aufgenommen (gespeichert und/oder verbraucht) werden kann. Die vorhandene Überschussenergie aus dem Energieversorgungsnetz kann somit in den Energiespeicher geladen werden. Bei einem Unterangebot an Energie kann auf eine Beladung des Energiespeichers über den ersten Energieinhalt hinaus verzichtet werden. Zusätzlich kann im Falle eines Unterangebotes an Energie im Netz kurzfristig auch der Zeitpunkt der Nachladung für den ersten Energieinhalt, die bei Unterschreiten des unteren Schwellwertes des ersten Energieinhaltes ausgelöst wird, kurzfristig verschoben werden. Dann steht dem Verbraucher bei einer Hystereseregelung zumindest während dieser kurzen Zeitspanne im Wesentlichen dieser untere Schwellwert des ersten Energieinhaltes im Bedarfsfalle zur Verfügung. Damit kann mit Hilfe des erfindungsgemäßen Verfahrens der Energieausgleich insbesondere in einem elektrischen Energieversorgungsnetz unterstützt werden. Prinzipiell ist es denkbar, den gesamten Speicherinhalt bis zur Beladungsgrenze des Energiespeichers der Anwendung zur Verfügung zu stellen. In diesem Fall würde der erste Energieinhalt 0 kWh betragen. Allerdings wäre dadurch der Komfort des Verbrauchers eingeschränkt, da, wenn die Anwendung für längere Zeit keinen Überschuss an Energie in den Energiespeicher lädt, kein Warmwasser entnommen werden könnte. Um den Komfort für den Verbraucher daher zu erhalten, ist daher erfindungsgemäß vorgesehen, einen ersten Energieinhalt in dem Energiespeicher zu speichern und mit Hilfe der Regelungseinrichtung zu halten, also zu regeln. Wie bereits erwähnt, ist es günstig, wenn das Flüssigkeitsvolumen im Aufnahmeraum in Bereiche bzw. Messzonen unterteilt wird und bei der Regelung des ersten Energieinhalts nur Bereiche bzw. Messzonen gezählt werden, in denen die Flüssigkeit eine Temperatur von zumindest 40 °C, zumindest 45 °C oder zumindest 50 °C aufweist. Beispielsweise kann der erste Energieinhalt der Wärmeenergie für ein 90 l Vollbad bei einer bestimmten Temperatur entsprechen. Die für einzelne Verbräuche zugrundeliegenden Energiemengen sind beispielsweise gemäß Tabelle 4 der DIN 4708, Teil 2, April 1994 festgelegt. Vorzugsweise liegt der erste Energieinhalt unter Zugrundelegung einer Bezugstemperatur von $T_0 = 45°C$ zwischen 0,5 kWh und 10 kWh, noch mehr bevorzugt zwischen 1,5 kWh und 6 kWh. Wesentlich für die Erfindung ist dabei, dass bei dem gegenständlichen Verfahren zur Beladung des Energiespeichers nicht primär die Temperatur, sondern die Energie als Richtgröße für die Beladung des Speichers herangezogen wird. Die Höhe der Beladungsgrenze und/oder die Höhe des ersten Energieinhalts können veränderbar sein. Somit kann ein Verbraucher das Verfahren für die individuellen Bedürfnisse einstellen. Die Höhe der Beladungsgrenze kann voreingestellt oder vordefiniert sein. Bevorzugt ist vorgesehen, dass die Beladungsgrenze der (technisch) maximalen Beladungsgrenze des Energiespeichers, bis zu der ein sicherer Betrieb des Energiespeichers gewährleistet ist, entspricht. Beispielsweise kann die Beladungsgrenze bei einer Bezugstemperatur $T_0$ von 15°C zwischen 6 kWh und 10 kWh, vorzugsweise bei 6,9 kWh oder 9,8 kWh, liegen. Vorzugsweise liegt die Beladungsgrenze bei gleicher Bezugstemperatur oberhalb des ersten Energieinhalts. Der Aufnahmeraum besitzt vorzugsweise ein Volumen zwischen 10 l und 5000 l, noch mehr bevorzugt zwischen 80 und 200 l. Die Wärmeenergiezuführeinrichtung kann zumindest einen elektrischen Heizstab aufweisen. Es ist aber auch möglich, dass die Wärmeenergiezuführeinrichtung mehrere Heizstäbe aufweist, wobei diese Heizstäbe auch unterschiedliche Heizleistungen aufweisen können und miteinander durch eine Regelung so verschaltet werden können, dass diese unterschiedliche Heizleistungen bereitstellen können (Kaskadierung, stufenlose Verschaltung). Zusätzlich oder alternativ kann die Wärmeenergiezuführeinrichtung zur Zuführung von Wärmeenergie einen Wärmetauscher aufweisen. Das im Wärmetauscher befindliche Wärmetauschermedium kann an einer anderen Stelle beispielsweise elektrisch, mittels Gasbrenner oder Heizofen erwärmt werden. Die Wärmeenergiezuführeinrichtung kann somit in einer beispielhaften Ausführungsform einen Wärmetauscher, der über ein Wärmetauschermedium mit thermischer Energie versorgt wird, und einen elektrischen Heizstab aufweisen. Dabei kann vorgesehen sein, dass die Erwärmung der Flüssigkeit im Aufnahmeraum primär über den Wärmetauscher erfolgt. Als Back-up und zur Einspeisung von elektrischer Überschussenergie der Anwendung kann der elektrische Heizstab herangezogen werden.

In einer bevorzugten Ausführungsform ist vorgesehen, dass der Energiespeicher, insbesondere die Wärmeenergiezuführeinrichtung, in ein elektrisches Energieversorgungsnetz, insbesondere ein Smart-Grid, eingebunden ist und die Anwendung eine Regelungsanwendung zur Kompensation eines Energieungleichgewichts, insbesondere eines Über- und/oder Unterangebots an Energie, in dem elektrischen Energieversorgungsnetz ist. Die Regelungsanwendung ist zur Regelung des Energieausgleichs in dem Energieversorgungsnetz vorgesehen ("Netzmanagement") und kann ein Computerprogramm, insbesondere ein Steuerungs-/Regelungsprogramm, sein. Bei "Smart Grids" handelt es sich um elektrische Energieversorgungsnetze, bei welchen der Energieausgleich durch Kommunikation zwischen Verbrauchern, Erzeugern und Speichern gesteuert wird. Die Wärmeenergiezuführeinrichtung ist direkt oder indirekt in das elektrische Energieversorgungsnetz eingebunden. Insbesondere kann vorgesehen sein, dass die Wärmeenergiezuführeinrichtung eine elektrische Heizvorrichtung ist und diese mit dem Energieversorgungsnetz verbunden ist.

In einer weiteren bevorzugten Ausführungsform ist vorgesehen, dass es sich bei der Anwendung um eine Photovoltaik-Einrichtung handelt. Dabei ist der Energiespeicher, insbesondere die Wärmeenergiezuführeinrichtung, mit der Photovoltaik-Einrichtung verbunden. Die Photovoltaik-Einrichtung weist zumindest ein PV-Paneel auf. Eine Regelungsanwendung regelt dabei die Leistungsabnahme über die Heizstäbe in Abhängigkeit des jeweils vorherrschenden Betriebspunktes der PV-Einrichtung. Bei dieser Ausführungsform kann die Photovoltaik-Einrichtung die von ihr produzierte elektrische (Überschuss-)Energie bis zur Beladungsgrenze in den Energiespeicher laden. Demnach kann beispielsweise die bei Sonneneinstrahlung erzeugte elektrische Energie in den Energiespeicher geladen werden, wenn die elektrische Energie nicht von anderen elektrischen Verbrauchern als den Energiespeicher benötigt wird.

Vorzugsweise entspricht ein der Anwendung zur Verfügung gestellter Speicherbereich zumindest der Differenz zwischen der Beladungsgrenze und einem momentanen Gesamtenergieinhalt des Energiespeichers. Der Speicherbereich kann der Anwendung als Energiesenke zur Verfügung gestellt werden. Der zur Verfügung gestellte Speicherbereich kann geladen werden, um ein Überangebot an Energie, beispielsweise in einem Energieversorgungsnetz, zu kompensieren. Als Bezugstemperatur kann bei der Bestimmung des Gesamtenergieinhalts beispielsweise die Temperatur des durch die Zuleitung zugeführten Frischwassers verwendet werden. Bei einem Unterangebot an Energie kann auf eine Beladung des als Energiesenke zur Verfügung gestellten Speicherbereichs verzichtet werden. Der momentane Gesamtenergieinhalt kann dem ersten Energieinhalt entsprechen. Dies kann insbesondere dann der Fall sein, wenn für die Bestimmung des momentanen Gesamtenergiegehalts die gleiche Bezugstemperatur herangezogen wird, wie für die Regelung des ersten Energieinhalts. Allerdings kann, wie oben erwähnt, vorgesehen sein, dass Bereiche des Aufnahmeraums bei der Bestimmung des ersten Energieinhalts auf Grund zu geringer Temperaturen nicht berücksichtigt werden. In diesem Fall entspricht der momentane Gesamtenergieinhalt nicht dem ersten Energieinhalt.

Um den momentanen Energieinhalt des Energiespeichers bestimmen zu können, ist es günstig, wenn an zumindest einer, vorzugsweise an zumindest zwei, Position/en im Aufnahmeraum eine Temperatur der Flüssigkeit gemessen wird. Die Genauigkeit bei der Bestimmung des Energieinhalts kann mit zunehmender Zahl an Temperaturmessungen an verschiedenen Positionen erhöht werden. Vorzugsweise werden Temperaturen an Positionen in verschiedenen Höhen des Aufnahmeraumes gemessen. Insbesondere können Temperaturen an verschiedenen Positionen parallel zur Längsachse des Aufnahmeraums gemessen werden. Die Positionen zur Temperaturmessung können beispielsweise an insbesondere regelmäßig beabstandeten Positionen entlang einer Geraden, welche im Wesentlichen senkrecht im Aufnahmeraum verläuft, angeordnet sein. Die Temperaturen können auch an Positionen in verschiedenen Höhen des Aufnahmeraums oder am Rand des Aufnahmeraums gemessen werden. Zweckmäßigerweise werden für die Bestimmung der Temperaturen Temperatursensoren an den jeweiligen Positionen eingesetzt.

In einer bevorzugten Ausführungsform ist vorgesehen, dass der Aufnahmeraum im Wesentlichen horizontal in zumindest zwei, vorzugsweise zumindest vier, Messzonen mit jeweils einer Zonenuntergrenze und einer Zonenobergrenze geteilt wird und an jeder Zonenuntergrenze jeweils eine Temperatur für die jeweilige Messzone bestimmt wird. Durch diese Unterteilung kann dem Umstand Rechnung getragen werden, dass sich bei einem Warmwasserspeicher im Aufnahmeraum im Wesentlichen horizontale Schichten mit unterschiedlichen Temperaturen ausbilden. Diese Schichten entstehen, weil meist von unten kaltes Frischwasser nachströmt und das bereits im Aufnahmeraum befindliche Warmwasser nach oben drückt. Um dabei Verwirbelungen zu vermeiden, wird der Druck des einströmenden Wassers reduziert oder es werden andere Maßnahmen zur Vermeidung von Verwirbelungen getroffen. Je mehr Messzonen wiederum verwendet werden, desto genauer kann der Temperaturverlauf innerhalb des Aufnahmeraums bestimmt werden. Vorzugsweise werden die Zonenobergrenze und die Zonenuntergrenze als im Wesentlichen horizontal angenommen. Aber auch jede andere Form der Zonengrenzen ist möglich, solange eine horizontale Unterteilung des Aufnahmeraums stattfindet. Wichtig ist nur, dass das Volumen der Zonen bekannt ist. Die Zahl der Messzonen hängt primär von der Größe des Aufnahmeraums ab. Bei einem Aufnahmeraum mit einem Fassungsvermögen von ca. 120 l sind bevorzugt zumindest vier Messzonen vorgesehen. Vorzugsweise schließen die Messzonen unmittelbar aneinander an, d.h. die Zonenobergrenze einer Messzone entspricht der Zonenuntergrenze einer darüberliegenden Messzone.

Um den Beladungszustand des Energiespeichers zu bestimmen, können auf Basis der gemessenen Temperaturen für die Messzonen ein Energieinhalt jeder Messzone bestimmt werden und die Energieinhalte der Messzonen zur Bestimmung eines momentanen Gesamtenergieinhalts des Energiespeichers aufsummiert werden. Der momentane Gesamtenergieinhalt entspricht dem momentanen Beladungszustand des Energiespeichers. Dabei kann, wie oben bereits erwähnt, für jede Messzone mit Hilfe der Formel

$$E = c * m * (T - T_0), \qquad\qquad (1)$$

bei Wasser insbesondere mit der Formel

$$E = 1{,}163\frac{kWh}{Km^3} * V * (T - T_0), \qquad (2)$$

ein Energieinhalt jeder Messzone bestimmt werden. Die Bezugstemperatur $T_0$ zur Bestimmung des Gesamtenergieinhalts kann der Temperatur des Frischwassers der Zuleitung entsprechen, beispielsweise 15°C. Nach der Bestimmung der Energieinhalte der Messzonen werden die Energieinhalte aufsummiert, um den Gesamtenergieinhalt des Energiespeichers zu erhalten. Im Folgenden seien zwei Messzonen mit jeweils V = 30 l angenommen. Die erste Messzone besitzt an der Zonenuntergrenze eine Temperatur von 45°C und die zweite Messzone an der Zonenuntergrenze eine Temperatur von 50°C. Die Bezugstemperatur $T_0$ beträgt 15°C. Mit diesen Werten können nun mit Hilfe der obigen Formeln die Energieinhalte der Messzonen bestimmt und aufsummiert werden. Mit Hilfe des bestimmten momentanen Gesamtenergieinhalts und der Beladungsgrenze kann festgestellt werden, wie hoch das theoretische Energiepotential (Ladepotential) ist, das der Anwendung noch als Energiesenke zur Verfügung gestellt werden kann. Dies ergibt sich aus der Differenz zwischen der Beladungsgrenze und dem bestimmten Gesamtenergiepotential. Der Energiespeicher kann der Anwendung somit bis zur Beladungsgrenze als Energiesenke dienen.

Alternativ kann der Gesamtenergieinhalt des Energiespeichers durch Bilanzierung von zugeführter Wärmemenge in den Energiespeicher und abgeführter Wärmemenge aus dem Energiespeicher bestimmt werden. Zu diesem Zweck können in der Ableitung und vorzugsweise auch in der Zuleitung Sensoren angeordnet sein, welche eine Bestimmung der zu- bzw. abgeführten Wärmeenergiemengen ermöglichen. Als Sensoren können insbesondere Durchflusssensoren, die den Volumenstrom bestimmen, und Temperatursensoren verwendet werden. Bei der Bilanzierung kann auch die durch die Wärmeenergiezuführeinrichtung zugeführte Wärmeenergie berücksichtigt werden. Zu diesem Zweck kann die Wärmeenergiezuführeinrichtung beispielsweise ein Kalorimeter, ein Wattmeter oder eine Strom- und Spannungsmesseinrichtung aufweisen. Über eine Zeitmessung kann auch eine Zeitdauer der zugeführten und abgeführten Wärmemengen erfasst werden. Bei der Bilanzierung kann bei Vernachlässigung von Wärmeverlusten durch die Isolierung folgende Gleichung verwendet werden:

$$E_{ges} = E_{in} - E_{ab} + E_{zu}. \qquad (3)$$

$E_{ges}$ bezeichnet dabei den Gesamtenergieinhalt des Energiespeichers, $E_{in}$ in die durch die Wärmeenergiezuführeinrichtung zugeführte Wärmeenergie, $E_{ab}$ die durch die Ableitung entnommene Wärmeenergie und $E_{zu}$ die durch die Zuleitung zugeführte Wärmeenergie. Zu- und abgeführte Wärmeenergien $E_{ab}$ und $E_{zu}$, allgemein als $E_{ab,zu}$ bezeichnet, können mittels der Formel

$$E_{ab,zu} = 1{,}163\frac{kWh}{Km^3} * \dot{V} * (T - T_0) * t_e \qquad (4)$$

bestimmt werden, wobei $\dot{V}$ den Volumenstrom, $t_e$ die Zeitdauer des Volumenstroms, T die Temperatur der Flüssigkeit und $T_0$ eine Bezugstemperatur bedeutet.

Da die Temperatur der Flüssigkeit im Aufnahmeraum in bestimmten Fällen auch nach oben hin zunehmen kann, also einen Temperaturgradienten aufweisen kann, und die Temperatur jeder Messzone an der Zonenuntergrenze bestimmt wird, wird für diese Fälle für jede Messzone ihre geringste Temperatur als Temperatur der Messzone bestimmt. Da der Energieinhalt maßgeblich von der Temperatur abhängt, wird somit auf Basis der oben erwähnten Formel

$$E = c * m * (T - T_0) \qquad (1)$$

für jede Messzone für diesen Fall ein Energieinhalt bestimmt, der etwas unter dem tatsächlichen Energieinhalt der jeweiligen Messzone liegt. Durch die Bestimmung der Temperatur an den Zonenuntergrenzen kann sichergestellt werden, dass der an den Verbraucher zugestandene nutzbare Energievorrat, also der erste Energieinhalt, auf jeden Fall zur Verfügung steht, da an dieser Position stets und unabhängig vom gerade vorherrschenden strömungstechnischen Zustand (und dem daraus resultierenden Temperaturgradienten innerhalb der Zone) die jeweils niedrigste Zonentemperatur, und in deren Folge der Mindestenergieinhalt der Zone ermittelt wird.

Zweckmäßigerweise können die gemessenen Temperaturen, die Energieinhalte der Messzonen, der momentane Gesamtenergieinhalt und/oder ein Beladungspotential an die Anwendung übermittelt werden. Die Übermittlung kann in zeitlich regelmäßigen und/oder unregelmäßigen Abständen stattfinden oder bei Abfrage durch die Anwendung erfolgen. Zusätzlich oder alternativ kann das momentan freie Beladungspotential, also die Differenz zwischen momentanen Gesamtenergieinhalt und Beladungsgrenze, an die Anwendung übermittelt werden. Die Daten können direkt oder indirekt, beispielsweise über einen zwischengeschalteten Server, an die Anwendung übermittelt werden.

Da im unteren Bereich des Aufnahmeraums üblicherweise Verwirbelungen durch einlaufendes Frischwasser entstehen und der Energieinhalt dieses Bereichs nur ungenau bestimmbar ist, ist es günstig, wenn sich zwischen einem Bodenbereich des Aufnahmeraums und den Messzonen ein Pufferbereich befindet. Demnach ist zwischen der untersten Messzone und dem Bodenbereich ein freier Abstand vorgesehen. Der Pufferbereich wird somit nicht bei der Bestimmung des Gesamtenergieinhalts und auch nicht bei der Regelung des ersten Energieinhalts berücksichtigt.

Aufgrund der Bestimmung der Temperatur an den unteren Zonengrenzen, wird wie oben beschrieben, die tiefste mögliche Temperatur einer Messzone erfasst. Dies bedeutet, dass im Falle eines auftretenden Temperaturgradienten, ein gegenüber dem tatsächlich im Warmwasserspeicher vorhandenen Energieinhalt zu niedriger Energieinhalt ermittelt werden kann. Dieser Ansatz sichert einerseits den Komfort des Verbrauchers unabhängig von der jeweils vorherrschenden strömungstechnischen Gegebenheit, andererseits wird dadurch ein zu hohes Energiepotential (Differenz zwischen Beladungsgrenze und momentanen Gesamtenergieinhalt) errechnet. Würde der Energiespeicher nun beladen werden, so hieße das, dass die im Energiespeicher einzubringende Energie das tatsächliche Energiefassungsvermögen des Warmwasserspeichers überschreiten würde. Eine derartige Überbeladung wird vorteilhafterweise durch den Pufferbereich kompensiert.

Um die Energieeffizienz zu erhöhen, kann in einer Ausführungsform vorgesehen sein, dass auf Basis eines Zeitverlaufs des Gesamtenergieinhalts ein Energiebeladungsplan für den Energiespeicher erstellt wird, welcher eine Höhe und einen Zeitverlauf des ersten Energieinhalts anpasst. Dabei wird das Verbraucherverhalten über einen vorgegebenen Zeitraum statistisch analysiert und auf Basis dieser Daten ein Energiebeladungsplan erstellt. Der Energiebeladungsplan ermöglicht die Anpassung des ersten Energieinhalts auf Basis des analysierten Verbraucherverhaltens. Beispielsweise kann ein Verbraucher jeden Tag um 19:00 Uhr eine 15-minütige Dusche nehmen. Im Zeitraum zwischen 8:00 und 17:00 Uhr wird kein Warmwasser entnommen. Auf Basis der Analyse kann der Energiebeladungsplan vorgeben, dass der erste Energieinhalt im Zeitraum zwischen 8:00 und 17:00 reduziert und im Zeitraum zwischen 18:45 Uhr und 19:15, rechtzeitig vor dem statistisch erfassten Duschvorgang, auf die statistisch erfasste Menge erhöht wird.

Da ein einzelner Energiespeicher zur Kompensation eines Überangebots an Energie in einem Energieversorgungsnetz nur ein vergleichsweise kleines Energiepotential zur Verfügung stellen kann, ist es günstig, mehrere Energiespeicher zu einem gemeinsamen Verbund zusammenzuschalten. Aus diesem Grund wird ein Verfahren zum Betrieb eines Verbunds von mehreren Energiespeichern, insbesondere Warmwasserspeichern, vorgeschlagen, wobei die Energiespeicher, insbesondere die Wärmeenergiezuführeinrichtung eines jeden Energiespeichers, in einem elektrischen Energieversorgungsnetz eingebunden sind und an jedem Energiespeicher das oben beschriebene Verfahren angewandt wird, wobei zur Kompensation eines Überangebots an Energie in dem elektrischen Energieversorgungsnetz die Energiespeicher mit Wärmeenergie geladen werden. Um bei Unterkapazität, also bei einem Unterangebot an Energie, im Energieversorgungsnetz dieses nicht zu belasten, kann bei Unterkapazität zumindest auf eine Beladung der Energiespeicher über die jeweiligen ersten Energieinhalte hinaus verzichtet werden. Es kann bei einem Unterangebot an Energie kurzfristg aber auch gänzlich auf eine Beladung verzichtet werden.

Die eingangs formulierte Aufgabe wird auch durch einen Energiespeicher, insbesondere einen Warmwasserspeicher, gelöst. Der Energiespeicher weist einen vorzugsweise wärmeisolierten Aufnahmeraum für eine Flüssigkeit, eine Zuleitung sowie eine Ableitung für die Flüssigkeit, eine Wärmeenergiezuführeinrichtung und eine Temperaturmesseinrichtung zur Bestimmung der Temperatur der Flüssigkeit auf. Erfindungsgemäß ist vorgesehen, dass eine erste Regelungseinrichtung vorgesehen ist, welche dazu eingerichtet ist, mit der Wärmeenergiezuführeinrichtung einen ersten Energieinhalt in dem Energiespeicher zu halten, und der Energiespeicher einer Anwendung bis zu einer Beladungsgrenze als Energiesenke zur Verfügung stellbar ist. Hinsichtlich der Vorteile der Merkmale wird auf das oben beschriebene Verfahren verwiesen. Der Energiespeicher kann unter anderem als direkt beheizter Energiespeicher, insbesondere als Elektrospeicher, oder indirekt beheizter Energiespeicher, wobei in diesem Fall eine zusätzliche elektrische Wärmeenergiezuführeinrichtung vorzusehen ist, ausgeführt sein. Weiters kann der Energiespeicher als Hängespeicher oder Standspeicher ausgeführt sein. Der Aufnahmeraum kann im Wesentlichen zylinderförmig oder quaderförmig ausgeführt sein. Der Aufnahmeraum kann außenseitig zumindest teilweise, insbesondere vollständig, eine Wärmeisolierung, insbesondere einen Hart- oder Weichschaum, einen Vliesstoff, eine Verbundisolierung oder eine Vakuumisolierung, aufweisen. Der Energiespeicher kann auch einen Schalter oder Taster aufweisen, mit dem der Verbraucher manuell eine einmalige Beladung des Energiespeichers bis zur Beladungsgrenze auslösen kann. Dies ist dann von Vorteil, wenn eine hohe oder außerplanmäßige Warmwasserentnahme benötigt wird, für die der erste Energieinhalt nicht ausreicht.

Günstig ist, wenn die Temperaturmesseinrichtung zumindest zwei, vorzugsweise zumindest vier, Temperaturmesssensoren aufweist, welche vorzugsweise im Wesentlichen senkrecht in dem Aufnahmeraum angeordnet sind. Die Temperatursensoren sind in unterschiedlichen Höhen im Aufnahmeraum angeordnet und vorzugsweise gleichmäßig beabstandet. Bevorzugt sind die Temperatursensoren parallel zur Längsachse des Aufnahmeraums angeordnet. Die Temperaturmesssensoren können dabei auch seitlich radial in den Aufnahmeraum ragen. Als Temperaturmesssensoren werden vorzugsweise Elemente verwendet, bei denen auf Basis der Änderung ihres ohmschen Widerstandes auf die Temperatur geschlossen werden kann. Es kann vorgesehen sein, dass die Temperatursensoren direkt in die Flüssigkeit (Wasser) ragen oder aber auch an der Oberfläche der Außenwand des Energiespeichers platziert sind (Anlegefühler).

Bevorzugt ist vorgesehen, dass die Temperaturmesssensoren in einem insbesondere wasserdicht abgedichteten ersten Rohr angeordnet sind. Bevorzugt kann vorgesehen sein, dass die Temperatursensoren in einem gemeinsamen ersten Rohr angeordnet sind. Es kann aber auch für jeden Temperatursensor jeweils ein eigenes Rohr vorgesehen sein. Die Temperaturmesssensoren können dabei entlang einer Geraden und insbesondere in einem regelmäßigen Abstand angeordnet sein. Vorzugsweise ist das erste Rohr im Wesentlichen senkrecht im Aufnahmeraum angeordnet.

Des Weiteren kann ein Sicherheitstemperatursensor, der vorzugsweise in einem zweiten Rohr angeordnet ist, und eine Sicherheitseinrichtung vorgesehen sein, wobei die Sicherheitseinrichtung die Wärmeenergiezuführeinrichtung deaktiviert, wenn der Sicherheitstemperatursensor einen Temperaturwert oberhalb einer Sicherheitstemperatur misst. Als Sicherheitstemperatursensor kann auch einer der Temperaturmesssensoren dienen. Alternativ kann als Sicherheitstemperatursensor ein eigenständiger Temperaturmesssensor vorgesehen sein, der vorzugsweise in einem wasserdichten zweiten Rohr angeordnet ist. Der Sicherheitstemperatursensor kann bei Überschreiten der Sicherheitstemperatur eine Notabschaltung des Energiespeichers vornehmen, um einen Schaden des Energiespeichers abzuwenden. Die Sicherheitstemperatur beträgt beispielsweise 105 °C. Eine weitere Möglichkeit besteht darin, dass die Temperatursensoren direkt in die Flüssigkeit (Wasser)ragen oder aber auch an der Oberfläche der Außenwand des Energiespeichers platziert sind (Anlegefühler).

Zur Verbindung mit der Anwendung kann ein Verbindungsmodul, insbesondere ein Funkverbindungsmodul, vorgesehen sein, welches einen Datenaustausch mit der Anwendung ermöglicht. Das Verbindungsmodul kann beispielsweise ein WLAN-Modul, ein WAN-Modul, ein GSM-Modul, oder ein Bluetooth-Modul sein. Die Anwendung kann ebenfalls ein entsprechendes Verbindungsmodul aufweisen. Vorzugsweise erfolgt der Datenaustausch via einem GSM-Netz.

In einer bevorzugten Ausführungsform kann eine zweite Regelungseinrichtung vorgesehen sein, welche dazu eingerichtet ist, eine Temperatur der Flüssigkeit zu regeln, wenn die erste Regelungseinrichtung deaktiviert ist und der Energiespeicher einer Anwendung nicht als Energiesenke zur Verfügung gestellt ist. "Deaktivieren" bedeutet in diesem Zusammenhang, dass die erste Regelungseinrichtung vollständig deaktiviert ist, also das oben beschriebene Verfahren nicht ausführt. Somit kann bei dem erfindungsgemäßen Energiespeicher die Betriebsart gewechselt werden. Mit der zweiten Regelungseinrichtung wird bevorzugt eine Temperaturhystereseregelung durchgeführt. In dieser Betriebsart kann der Energiespeicher somit wie ein konventioneller Energiespeicher betrieben werden. Die Temperaturhysterese kann beispielsweise zwischen 1 °C und 15 °C, insbesondere zwischen 4 °C und 8 °C, betragen. Die Zieltemperatur kann vorgegeben, d.h. eingestellt, werden. Die zweite Regelungseinrichtung kann insbesondere ein Thermostat sein.

Im Folgenden wird die Erfindung an Hand von Figuren näher erläutert, auf die sie allerdings nicht beschränkt sein soll.

Fig. 1 zeigt eine schematische Darstellung eines Energiespeichers im Querschnitt;

Fig. 2 zeigt ein Diagramm mit eingezeichneten Energien;

Fig. 3A und Fig. 3B zeigen Zeitverläufe mit Energieinhalten des Energiespeichers;

Fig. 4 zeigt einen Zeitverlauf eines ersten Energieinhalts;

Fig. 5A und Fig. 5B zeigen einen Verbund von Energiespeichern;

Fig. 6A, Fig. 6B und Fig. 6C zeigen einen elektrischen Schaltplan des Energiespeichers;

Fig. 7 zeigt den Energiespeicher gemäß einer alternativen Ausführungsform; und

Fig. 8 zeigt den Energiespeicher in Verbindung mit einer Photovoltaik-Anlage.

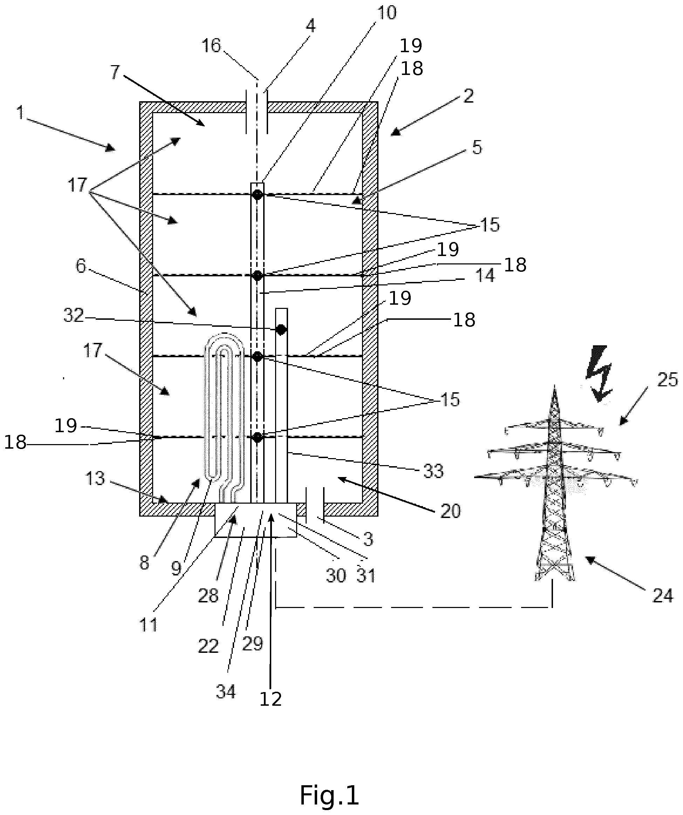

Fig. 1 zeigt einen Energiespeicher 1 in Form eines Warmwasserspeichers 2 mit einer unterseitigen Zuleitung 3 und einer oberseitigen Ableitung 4. Warmwasserspeicher 2 werden üblicherweise in Haushalten zur Warmwasseraufbereitung verwendet. Der gezeigte Warmwasserspeicher 2 ist als Hängespeicher ausgeführt. Der erfindungsgemäße Warmwasserspeicher 2 ist jedoch nicht auf diese Ausgestaltung beschränkt. Der Warmwasserspeicher 2 verfügt über einen Aufnahmeraum 5 für Wasser, der im gezeigten Ausführungsbeispiel ein Fassungsvermögen von 130 l besitzt, und ist außenseitig von einer Wärmeisolierung 6 umgeben. Über die Zuleitung 3 gelangt Frischwasser in den Aufnahmeraum 5, welches nach Erwärmung über die Ableitung 4 wieder entnommen werden kann.

Zum Erwärmen des im Aufnahmeraum befindlichen Wassers 7 weist der Energiespeicher 1 eine Wärmeenergiezuführeinrichtung 8 auf, welche einen elektrischen Heizstab 9 aufweist. Die Wärmeenergiezuführeinrichtung 8 kann auch mehrere Heizstäbe mit jeweils unterschiedlicher Heizleistung und/oder zusätzlich auch einen Wärmetauscher aufweisen oder mit einer Wärmeerzeugungsvorrichtung, beispielsweise einem Heizkessel verbunden sein. Zum Messen der Temperatur des Wassers 7 besitzt der Energiespeicher 1 des Weiteren eine Temperaturmesseinrichtung 10. Die Wärmeenergiezuführeinrichtung 8 und die Temperaturmesseinrichtung 10 sind in der gezeigten Ausführungsform an einem Flansch 11 angeordnet, der in eine Ausnehmung 12 im Bodenbereich 13 des Aufnahmeraums 5 wasserdichtend eingefügt ist. Unterhalb des Flansches 11, außerhalb des Aufnahmeraums 5, kann eine Steuerungseinheit 28 für den Energiespeicher 1 vorgesehen sein. Die Temperaturmesseinrichtung 10 weist ein wasserdicht abgedichtetes erstes Rohr 14 auf, in welchem in vorzugsweise regelmäßigen Abständen vier Temperaturmesssensoren 15 eingefügt sind. Die Temperaturmesssensoren 15 sind jeweils dazu eingerichtet, eine Temperatur des Wassers 7 zu messen. Die Temperaturmesssensoren 15 sind entlang einer Geraden angeordnet, die parallel zur Längsachse 16 des Aufnahmeraums 5 verläuft, insbesondere mit dieser zusammenfällt. Die Temperaturmessensoren 15 können aber auch seitlich im Aufnahmeraum 5 angeordnet sein. Vorzugsweise sind die Temperaturmessensoren 15 an Positionen in verschiedenen Höhen des Aufnahmeraums 5 angeordnet.

In dieser Offenbarung beziehen sich Richtungs- und Ortsangaben auf den bestimmungsgemäßen Gebrauchszustand des Energiespeichers. Der Bodenbereich ist dabei "unten".

Um einen Energieinhalt des im Aufnahmeraum 5 befindlichen Wassers 7 zu bestimmen, wird der Aufnahmeraum 5 im gezeigten Ausführungsbeispiel horizontal in vier Messzonen 17 unterteilt, welche in der gezeigten Darstellung durch strichlierte Linien begrenzt sind. Je höher die Zahl der Messzonen 17 ist, desto genauer kann der Energieinhalt des Energiespeichers 1 bestimmt werden. Die Messzonen 17 sind von unten nach oben hin aufsteigend durchnummeriert. Der untersten Messzone 17 ist demnach die Zahl Eins zugewiesen. Jede Messzone 17 besitzt eine insbesondere horizontal verlaufende Zonenuntergrenze 18 und eine insbesondere horizontal verlaufende Zonenobergrenze 19. In der gezeigten Ausführungsform fällt die Zonenobergrenze 19 einer Messzone 17 mit der Zonenuntergrenze 18 der darüberliegenden Messzone 17 zusammen. Die Messzonen 17 sind dabei derart gelegt, dass an jeder Zonenuntergrenze 18 ein Temperaturmesssensor 15 angeordnet ist. Demnach sind bevorzugt die Zahl der Messzonen 17 und die Zahl der Temperatursensoren 15 gleich. Die von einem Temperaturmesssensor 15 bestimmte Temperatur an der Zonenuntergrenze 18 wird als Temperatur für die jeweilige Messzone 17 herangezogen. Da die Temperatur im Falle eines vorliegenden Temperaturgradienten im Aufnahmeraum 5 typischerweise von unten nach oben hin zunimmt, wird für jede Messzone 17 die geringste Temperatur der Messzone 17 als Temperatur für die Messzone 17 herangezogen. Die so bestimmte Temperatur der Messzone 17 liegt damit in der Regel unterhalb der Durchschnittstemperatur der Messzone 17. Zwischen der untersten Messzone 17 und dem Bodenbereich 13 des Aufnahmeraums 5 ist des Weiteren noch ein Pufferbereich 20 vorgesehen, der bei der Bestimmung eines Energieinhalts nicht berücksichtigt wird.

Der Energieinhalt des im Aufnahmeraum 5 befindlichen Wassers 7 lässt sich durch Aufsummieren der einzelnen Energieinhalte der Messzonen 17 bestimmen. Zu diesem Zweck kann die Formel

$$E = c * m * (T - T_0) \qquad (1)$$

auf jede Messzone 17 angewandt werden, wobei c die spezifische Wärmekapazität der Flüssigkeit, m die Masse der Flüssigkeit, T die Temperatur der Flüssigkeit und $T_0$ eine Bezugstemperatur bedeuten. Je nach Wahl der Bezugstemperatur lassen sich unterschiedliche Arten von Energieinhalten bestimmen. Mit den entsprechenden Zahlenwerten für Wasser (spezifische Wärmekapazität c = 4 190 J/kgK, Dichte 1000 kg/m³) lässt sich die Formel umschreiben auf

$$E = 1,163 \frac{kWh}{Km^3} * V * (T - T_0), \qquad (2)$$

wobei die Energie mit Einheit kWh berechnet wird und V das Volumen in Kubikmeter der Flüssigkeit bzw. der Messzone 17 bedeutet. Als Volumen V wird zur Berechnung das Volumen einer Messzone 17 herangezogen. Als Temperatur T wird die Temperatur der Messzone 17, also die Temperatur an der jeweiligen Zonenuntergrenze 18, verwendet. Als Bezugstemperatur $T_0$ kann, abhängig von der Art des zu bestimmenden Energieinhalts, beispielsweise die Temperatur des zulaufenden Frischwassers oder eine höhere Bezugstemperatur herangezogen werden.

Erfindungsgemäß ist vorgesehen, dass in dem Energiespeicher 1 ein erster Energieinhalt 21 gespeichert und gehalten wird. Der erste Energieinhalt 21 soll im Folgenden 1 kWh betragen. Bei der Bestimmung des ersten Energieinhalts 21 bzw. eines momentanen Energieinhalts für die Regelung des ersten Energieinhalts 21 wird im Folgenden eine Bezugstemperatur $T_0$ = 40°C gewählt. Zudem werden Messzonen 17 mit Temperaturen unterhalb der Bezugstemperatur $T_0$ nicht bei der Bestimmung des ersten Energieinhalts 21 bzw. bei der Regelung des ersten Energieinhalts 21 berücksichtigt. Mit anderen Worten wird bei der Bestimmung des ersten Energieinhalts 21 bzw. bei der Regelung des ersten Energieinhalts 21 nur die vorhandene Energie in Messzonen 17 oberhalb der Bezugstemperatur $T_0$ berücksichtigt. Ein solcher für die Regelung des ersten Energieinhalts 21 herangezogener Energieinhalt wird im Weiteren auch als nutzbarer Energieinhalt bezeichnet.

Für die folgenden Berechnungen werden zur besseren Darstellung die einzelnen Energieinhalte anhand eines Beispiels berechnet.

Für die Bestimmung bzw. Regelung des ersten Energieinhaltes 21 wird eine Bezugstemperatur von $T_0$ = 40 °C verwendet, da es sich hierbei um eine Temperatur handelt, die in einem Haushalt für einen Verbraucher zweckmäßig nutzbar ist. Messzonen 17 mit einer Temperatur T unterhalb der Bezugstemperatur $T_0$ werden bei der Bestimmung bzw. Regelung des ersten Energieinhalts 21 nicht berücksichtigt. Als Beispiel werden für die Messzonen 17 nun folgende Temperaturen angenommen (wobei der beigefügte Index der Nummerierung der Messzonen 17 entspricht):

$T_1$ = 35 °C;
$T_2$ = 45 °C;
$T_3$ = 47 °C;
$T_4$ = 53 °C;

Im Folgenden sei angenommen, dass jede der vier Messzonen 17 ein Volumen V von 0,03 $m^3$ (30 Liter) aufweist. Demnach ergeben sich für die Messzonen 17 unter Verwendung der Formel (2) gerundet folgende Energiewerte bei einer Bezugstemperatur von $T_0$ = 40 °C (wobei der beigefügte Index der Nummerierung der Messzonen 17 entspricht):

$E_1$ = 0 kWh; Erläuterung: Da die Temperatur mit 35°C unterhalb der Bezugstemperatur $T_0$ von 40°C liegt, wird die Energie der ersten Messzone 17 nicht bei der Regelung des ersten Energieinhaltes 21 berücksichtigt.
$E_2$ = 0,17 kWh;
$E_3$ = 0,24 kWh;
$E_4$ = 0,45 kWh;

Die Energieinhalte der einzelnen Messzonen 17 (bis auf jener der ersten Messzone) werden nun aufsummiert. Das Ergebnis berechnet sich zu 0,86 kWh. Das Ergebnis stellt den nutzbaren Energieinhalt dar und wird für die Regelung des ersten Energieinhalts 21 herangezogen. Der erste Energieinhalt 21 beträgt im Beispiel 1 kWh. Es ist daher notwendig, dass dem Energiespeicher 1 Energie zugeführt wird, und zwar die Differenz zwischen 1 kWh und 0,86 kWh. Dies erfolgt über der Wärmeenergiezuführeinrichtung 8 und eine Regelungseinrichtung 22, welche dazu eingerichtet ist, den ersten Energieinhalt 21 zu halten. Es wird dem Energiespeicher 1 Energie zugeführt, bis der erste Energieinhalt 21 vorhanden ist.

Weiters ist erfindungsgemäß vorgesehen, dass der Energiespeicher 1, ausgehend von einem momentanen Gesamtenergieinhalt $E_{ges}$ (Bezugsziffer 41) bis zu einer Beladungsgrenze 23 einer Anwendung 24 als Energiesenke zur Verfügung gestellt wird. Die Ermittlung des momentanen Gesamtenergieinhalts $E_{ges}$ erfolgt auf Basis einer Bezugstemperatur $T_0$ in der Höhe der Frischwassertemperatur. Im Folgenden sei für den Gesamtenergieinhalt $E_{ges}$ die Bezugstemperatur $T_0$ mit 15°C angenommen. Für das obere Beispiel ergeben sich unter Zuhilfenahme der Gleichung (2) folgende zonenspezifische Energieinhalte:

$E_1$ = 0,70 kWh;
$E_2$ = 1,04 kWh;
$E_3$ = 1,12 kWh;
$E_4$ = 1,33 kWh;

Der Gesamtenergieinhalt $E_{ges}$ kann durch Aufsummieren der einzelnen Energieinhalte $E_{1-4}$ der Messzonen 17 erhalten werden und ergibt sich in diesem Beispiel zu $E_{ges}$ = 4,19 kWh.

Geht man nun von einer Beladungsgrenze 23 von beispielsweise 6 kWh aus (ebenfalls auf Basis einer Bezugstemperatur von $T_0$ = 15°C berechnet), so ergibt sich eine Differenz von 1,81 kWh, die einer Anwendung 24 als Energiesenke zur Verfügung gestellt werden kann, wobei gleichzeitig für den Verbraucher ein erster Energieinhalt 21 gehalten wird, der jederzeit abrufbar ist.

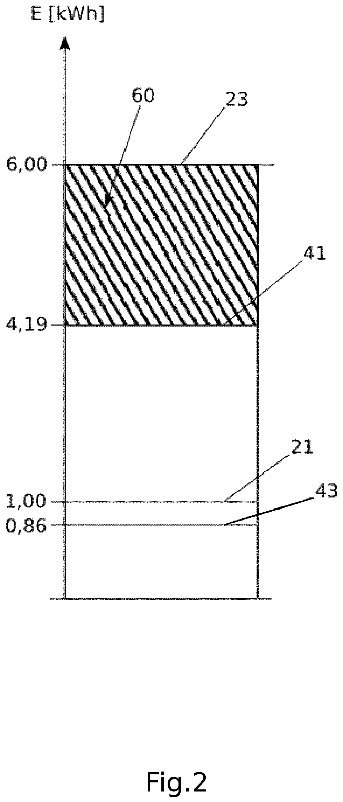

Der beschriebene Sachverhalt ist in Fig. 2 näher veranschaulicht, wobei alle Energieinhalte in einem Diagramm dargestellt sind, auch wenn ihnen unterschiedliche Bezugstemperaturen $T_0$ zugrunde gelegt wurden. Der erste Energieinhalt 21 (Bezugstemperatur $T_0$ = 40 °C) kann dabei ein Energieinhalt sein, der für einen Verbraucher im Energiespeicher 1 bevorratet wird und abgerufen werden kann. Bei dem ersten Energieinhalt 21 kann es sich beispielsweise um eine Energiemenge handeln, die für einen zehnminütigen Duschvorgang üblicherweise ausreichend ist, beispielsweise 1 kWh. Im obigen Beispiel wird für die Bestimmung und Regelung des ersten Energieinhalts 21 eine Bezugstemperatur von $T_0 = 40°C$ verwendet. Mit dieser Bezugstemperatur ergibt sich, dass ein nutzbarer Energieinhalt von 0,86 kWh in dem Energiespeicher vorhanden ist. Dieser Energieinhalt wird mit der Bezugsziffer 43 bezeichnet. Somit muss dem Energiespeicher 1 Energie in der Höhe von 0,14 kWh zugeführt werden, damit im Energiespeicher 1 der erste Energieinhalt 21 vorhanden ist. Weiters wird der Energiespeicher 1 ausgehend vom momentanen Gesamtenergieinhalt $E_{ges}$ (Bezugstemperatur $T_0 = 15 °C$) bis zu der Beladungsgrenze 23, welche beispielsweise im obigen Beispiel bei 6 kWh liegen kann, einer Anwendung 24 als Energiesenke zur Verfügung gestellt. Dies entspricht dem schraffierten Bereich 60 in Fig. 2. Ein der Anwendung 24 zur Verfügung gestellter Energiebereich 60 entspricht bevorzugt daher zumindest der Differenz zwischen der Beladungsgrenze 23 und dem momentanen Gesamtenergieinhalt $E_{ges}$. "Energiesenke" bedeutet in diesem Zusammenhang, dass die Energie in den Energiespeicher 1 verschoben bzw. gespeichert werden kann. Dadurch kann das Beladungspotential des Energiespeichers 1 ausgenutzt werden. Bei der Anwendung 24 kann es sich beispielsweise um eine Regelungsanwendung zur Kompensation eines Energieungleichgewichts, insbesondere eines Überangebots an elektrischer Energie, in dem elektrischen Energieversorgungsnetz 25 handeln. Dabei kann die Wärmeenergiezuführeinrichtung 8 an das Energieversorgungsnetz 25 angeschlossen sein. Bei einem Überangebot an Energie kann die Anwendung 24 die Wärmeenergiezuführeinrichtung 8 aktivieren und somit elektrische Energie in thermische Energie umwandeln und im Aufnahmeraum 5 speichern. Bei der Anwendung 24 kann es sich auch um eine Photovoltaik-Einrichtung oder jedwede andere Einrichtung zur Energieerzeugung, beispielsweise eine Windkraftanlage, handeln.

In einem elektrischen Energieversorgungnetz 25 sollen sich Angebot und Nachfrage an Energie zu jedem Zeitpunkt decken. Wenn ein Überangebot an Energie vorhanden ist, muss dieses Überangebot kompensiert, d.h. verbraucht oder gespeichert werden. Das vorliegende Verfahren ermöglicht das Verbrauchen bzw. Speichern des Überangebots an Energie in dem Energieversorgungsnetz 25, indem der Energiespeicher 1 bis zur Beladungsgrenze 23 als Energiesenke zur Verfügung gestellt wird. Andererseits kann bei einem Unterangebot an Energie auf eine Beladung des Energiespeichers 1 über den ersten Energieinhalt 21 hinaus verzichtet werden. Durch Bevorratung des ersten Energieinhalts 21 wird dem Verbraucher jedoch eine (Mindest-)Energiemenge zur Verfügung gestellt, die nutzbar ist. Die Höhe des ersten Energieinhalts 21 und der Beladungsgrenze 23 ist veränderbar, d.h. einstellbar. Vorzugsweise entspricht die Beladungsgrenze 23 der (technisch) maximalen Beladungsgrenze des Energiespeichers 1, bis zu der ein sicherer Betrieb des Energiespeichers gewährleistet ist. Wenn der Energiespeicher über den ersten Energieinhalt 21 hinaus geladen ist, kann auch diese Energiemenge von einem Verbraucher genutzt werden. Auch der erste Energieinhalt 21 ist veränderbar, insbesondere durch einen Verbraucher (Benutzer).

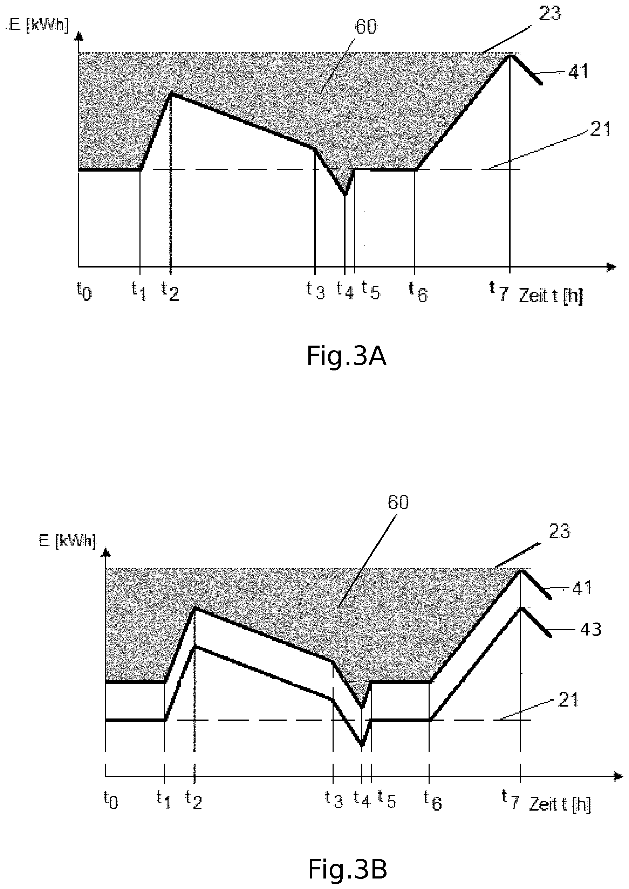

Fig. 3A und Fig. 3B zeigen beispielhafte Zeitverläufe von Energieinhalten des Energiespeichers 1. Auf der Abszisse ist die Zeit in Stunden aufgetragen. Auf der Ordinate ist der Energieinhalt in kWh aufgetragen. Die eingetragenen Energiewerte dienen als Beispiel. Zur Illustration wird zunächst in Bezug auf Fig. 3A für die Bestimmung des ersten Energieinhalts 21, für die Bestimmung des Gesamtenergieinhalts $E_{ges}$ und für die Beladungsgrenze 23 die gleiche Bezugstemperatur $T_0$ verwendet. Eine Hysterese für die Regelung wird vernachlässigt. Weiters wird angenommen, dass die Temperatur jeder Messzone 17 oberhalb der Bezugstemperatur $T_0$ liegt. In diesem speziellen Fall entspricht zum Zeitpunkt $t_0$ der momentane Gesamtenergieinhalt $E_{ges}$ dem ersten Energieinhalt 21. Zum Zeitpunkt $t_0$ ist also nur der erste Energieinhalt 21 in dem Energiespeicher 1 bevorratet. Der erste Energieinhalt 21 wird durch die erste Regelungseinrichtung 22 gehalten, sodass Wärmeverluste aus dem Energiespeicher 1 ausgeglichen werden. Zum Zeitpunkt $t_1$ wird der Energiespeicher 1 bis zum Zeitpunkt $t_2$ durch die Anwendung 24 als Energiesenke genutzt und über den ersten Energieinhalt 21 hinaus, jedoch nicht zur Beladungsgrenze 23, mit Energie beladen. Die Nutzung als Energiesenke endet zum Zeitpunkt $t_2$. Anschließend führen Wärmeverluste zur Abnahme des Gesamtenergieinhalts $E_{ges}$. Die erste Regelungseinrichtung 22 ist dabei inaktiv, da der Gesamtenergieinhalt $E_{ges}$ bzw. der nutzbare Energieinhalt oberhalb des ersten Energieinhalts 21 liegt. Zum Zeitpunkt $t_3$ findet bis zum Zeitpunkt $t_4$ eine Warmwasserentnahme durch einen Verbraucher statt, die den Gesamtenergieinhalt $E_{ges}$ kurzzeitig unterhalb des ersten Energieinhalts 21 befördert. Dies wird jedoch durch Aktivieren der Wärmeenergiezuführeinricht 8 durch die erste Regelungseinrichtung 22 wieder ausgeglichen, sodass zum Zeitpunkt $t_5$ wieder der erste Energieinhalt 21 in dem Energiespeicher 1 bevorratet ist. Zum Zeitpunkt $t_6$ wird der Energiespeicher 1 erneut als Energiesenke von der Anwendung 24 genutzt, diesmal bis zur Beladungsgrenze 23. Die Nutzung als Energiesenke durch die Anwendung ist zum Zeitpunkt $t_7$ beendet.

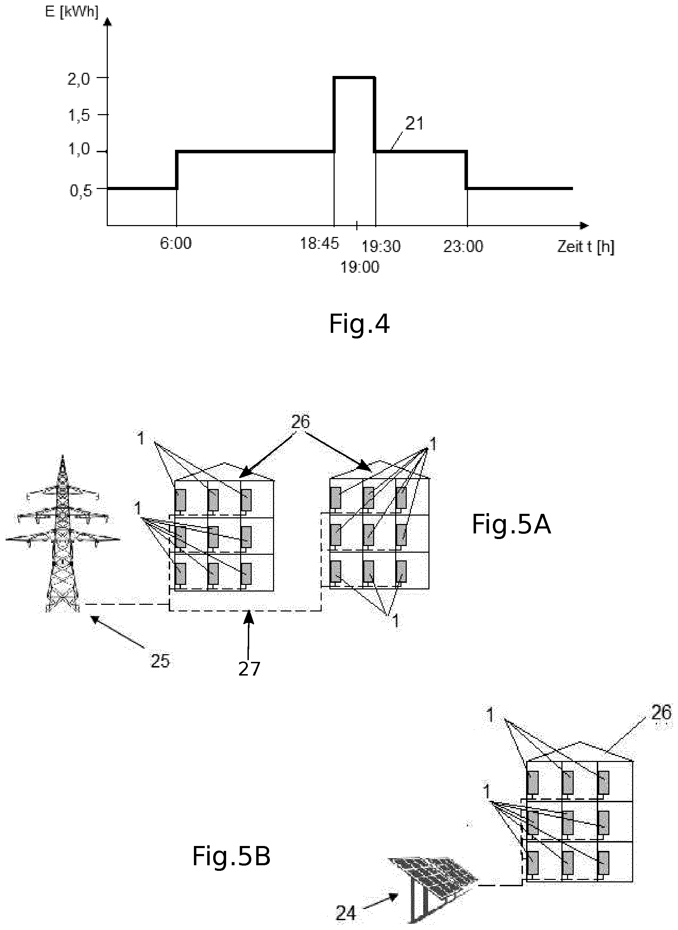

In Fig. 3B ist der gleiche Ablauf erneut dargestellt. In Fig. 4B wird jedoch dem ersten Energieinhalt 21 und zu dessen Regelung eine Bezugstemperatur $T_{01}$ verwendet, welche höher als die Bezugstemperatur $T_{02}$ zur Bestimmung des momentanen Gesamtenergieinhalts $E_{ges}$ und der Beladungsgrenze 23 ist. Der Energieinhalt mit der Bezugstemperatur $T_{01}$ zur Regelung des ersten Energieinhalts 21 wird mit der Bezugsziffer 43 bezeichnet. Der momentane Gesamtenergieinhalt $E_{ges}$, dem die Bezugstemperatur $T_{02}$ zugrunde gelegt wird, wird mit der Bezugsziffer 41 bezeichnet.

Der erste Energieinhalt 21 ist insbesondere durch einen Verbraucher (Benutzer) veränderbar, um den ersten Energieinhalt 21 auf die jeweiligen Bedürfnisse einstellen zu können. Es kann aber auch vorgesehen sein, dass der erste Energieinhalt 21 gemäß eines Beladungsplans eingestellt wird. Dies ist in Fig. 4 näher dargestellt. In Fig. 4 ist auf der Abszisse die Uhrzeit und auf der Ordinate die Energie aufgetragen. Beispielsweise kann eine statistische Analyse des Verbraucherverhaltens ergeben, dass jeden Tag zwischen 19:00 Uhr und 19:30 Uhr eine Warmwassermenge von 2 kWh entnommen wird. Demgemäß kann auf Basis dieser statistischen Analyse der Beladungsplan prädikativ vorgeben, dass der erste Energieinhalt 21 kurz vor 19:00 Uhr, beispielsweise um 18:45, auf 2 kWh angehoben wird. Zudem kann die statistische Analyse beispielsweise ergeben haben, dass in der Nacht zwischen 23:00 und 6:00 morgens üblicherweise kein Warmwasser aus dem Energiespeicher 1 entnommen wird. Dementsprechend kann der erste Energieinhalt 21 zwischen 23:00 und 6:00 auf 0,5 kWh abgesenkt werden. Dieser Sachverhalt ist in Fig. 4 dargestellt.

Fig. 5A zeigt mehrere Haushalte 26, welche jeweils einen Energiespeicher 1 besitzen. Die Energiespeicher 1 können zu einem Verbund 27 zusammengeschaltet sein, um den als Energiesenke zur Verfügung stehenden Speicherbereich zu erhöhen und um die Koordination für einen Energieversorger zu erleichtern.

Fig. 5B zeigt ebenfalls mehrere Haushalte 26 mit jeweils einem Energiespeicher 1 als Teil eines Verbundes 27, dessen kollektive Energiesenke einer PV-Anwendung 24 zur Verfügung gestellt wird.

Der Energiespeicher 1 kann eine Steuerungseinheit 28 aufweisen. Die Steuerungseinheit 28 schaltet die Wärmeenergiezuführeinrichtung 8 und kann weiters die erste Regelungseinrichtung 22 aufweisen. Die erste Regelungseinrichtung 22 regelt den ersten Energieinhalt 21, insbesondere mittels Hystereseregelung, sodass der erste Energieinhalt 21 gehalten wird. Der ersten Regelungseinrichtung 22 steht dabei vorzugsweise der Wert des momentanen Energieinhaltes zur Verfügung, wobei hierzu die Bezugstemperatur des ersten Energieinhalts 21, z.B. 40°C, verwendet wird.

Wenn in dem Energiespeicher 1 der erste Energieinhalt 21 unterschritten wird, aktiviert die erste Regelungseinrichtung 22 die Wärmeenergiezuführeinrichtung 8. Die erste Regelungseinrichtung 22 kann eine eigenständige Einheit sein oder in die Steuerungseinheit 28 integriert sein.

Weiters kann der Energiespeicher 1 eine zweite Regelungseinrichtung 29 aufweisen, welche ebenfalls in die Steuerungseinheit 28 integriert sein kann oder eine eigenständige Einheit bilden kann. Die zweite Regelungseinrichtung 29 kann aktiv sein, wenn die erste Regelungseinrichtung 22 ausgeschaltet ist und der Energiespeicher 1 nicht einer Anwendung 24 als Energiesenke zur Verfügung steht. Die zweite Regelungseinrichtung 29 kann dazu eingerichtet sein, die Temperatur der Flüssigkeit im Aufnahmeraum 5 gemäß einer Temperaturwertvorgabe, welche beispielsweise von einem Verbraucher eingestellt werden kann, zu regeln. Somit kann der Energiespeicher 1 auch als "konventioneller" Energiespeicher 1 eingesetzt werden. Vorzugsweise erfolgt die Regelung der Temperatur der Flüssigkeit im Aufnahmeraum 5 mittels der zweiten Regelungseinrichtung 22 mit einer Temperatur-Hystereseregelung.

Um Daten, wie etwa die gemessenen Temperaturen, die ermittelten Energieinhalte der Messzonen 17 und/oder der momentane Gesamtenergieinhalt $E_{ges}$ an die Anwendung 24 zu übermitteln, kann der Energiespeicher 1 ein Verbindungsmodul 30, insbesondere ein Funkverbindungsmodul 31, aufweisen, welches einen Datenaustausch mit der Anwendung 24 ermöglicht. Das Verbindungsmodul 30 kann ebenfalls in die Steuerungseinheit 28 integriert sein kann oder eine eigenständige Einheit bilden. Der Datenaustausch kann dabei uni- oder bidirektional sein. Beispielsweise kann als Verbindungsmodul ein GSM-Modul vorgesehen sein.

Der Energiespeicher 1 in Fig. 1 kann des Weiteren noch einen Sicherheitstemperatursensor 32 aufweisen, der vorzugsweise in einem zweiten Rohr 33 angeordnet ist. Die Aufgabe des Sicherheitstemperatursensors kann jedoch auch durch einen Temperatur Sensor 15 übernommen werden. Weiters ist eine Sicherheitseinrichtung 34 vorgesehen, welche die Wärmeenergiezuführeinrichtung 8 deaktiviert, wenn der Sicherheitstemperatursensor 32 einen Temperaturwert der Flüssigkeit oberhalb einer Sicherheitstemperatur misst. Die Sicherheitseinrichtung 34 kann ebenfalls in die Steuerungseinheit 28 integriert sein kann oder eine eigenständige Einheit bilden.

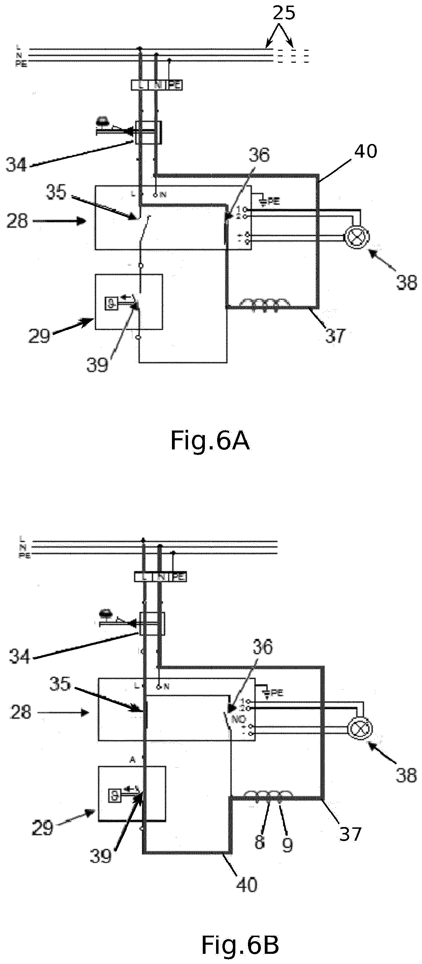

Fig. 6A und Fig. 6B zeigen einen Schaltplan des elektrischen Energiespeichers 1. An der Oberseite des Schaltplans sind drei elektrische Leitungen L (Außenleiter), N (Neutralleiter) und PE (Erdung) erkennbar. Die Leitungen sind mit einem elektrischen Energieversorgungsnetz 25 verbunden. Die Steuerungseinheit 28 ist an die Leitungen N und L über die Sicherheitseinrichtung 34 angeschlossen. Wenn die Sicherheitseinrichtung 34 auf Grund einer durch den Sicherheitstemperatursensor 32 gemessenen zu hohen Temperatur des Wassers auslöst, wird die elektrische Verbindung der Steuerungseinheit 28 zu der/n elektrischen Leitung/en L und/oder N getrennt. Der linke Schalter 35 ist als Schließkontakt ("im Ruhezustand geschlossen") und der rechte Schalter 36 als Öffnerkontakt ("im Ruhezustand offen") ausgeführt. Wenn die erste Regelungseinrichtung 22 ordnungsgemäß aktiv ist und der Energiespeicher 1 einer Anwendung 24 als Energiesenke zur Verfügung gestellt wird, ist der linke Schalter 35 geöffnet und der rechte Schalter 36 geschlossen. Die Wärmeenergiezuführeinrichtung 8 bzw. der Heizstab 9 wird dann mit elektrischer Energie über den rechten Schalter 36 versorgt (Stromkreis 37 in Fig. 6A). Die erste Regelungseinrichtung 22 kann in diesem Zustand die Regelung des ersten Energieinhalts 21 vornehmen. In diesem Zustand ist auch der Taster 38 aktiv. Wird dieser betätigt, so erfolgt unabhängig von der ersten Regelungseinrichtung 22 eine bis zu einer vorzugsweise einstellbaren oberen Beladungsgrenze eine Aufladung durch die Wärmeenergiezuführeinrichtung 8. Gleichzeitig wird an die Anwendung 24 ein Signal übermittelt, wodurch diese den Energiespeicher 1 für eine allfällige Beladung nicht berücksichtigt und zwar solange, bis dass ein unterer, ebenfalls einstellbarer Schwellwert, der jedoch zumindest dem unteren Schwellwert innerhalb der Hysterese des ersten Energieinhaltes 21 entspricht erreicht wird. Während dieser Phase bleibt jedoch die erste Regelungseinrichtung 22 aktiv geschalten, entspricht also dem Schaltbild 6A. Trotzdem erfolgt keine Beladung während dieser Zeit, da die Anwendung 24 den Energiespeicher 24 nicht für eine allfällige Beladung berücksichtigt. Im Falle, dass die erste Regelungseinrichtung 22 nicht aktiv ist, öffnet sich der rechte Schalter 36 und schließt sich der linke Schalter 35. Somit erfolgt nun die Versorgung über die zweite Regelungseinrichtung 29, welche als Regel-Thermostat 29 ausgeführt sein kann. Die Wärmeenergiezuführeinrichtung 8 bzw. der Heizstab 9 wird nun mit elektrischer Energie über den linken Schalter 35 versorgt. Zwischen dem linken Schalter 35 und der Wärmeenergiezuführeinrichtung 8 ist die zweite Regelungseinrichtung 29 geschaltet. Die zweite Regelungseinrichtung 29 ist in der gezeigten Darstellung als Regel-Thermostat ausgeführt, das die Temperatur der Flüssigkeit im Aufnahmeraum 5 gemäß einem Temperaturvorgabewert regelt. Wenn der in der zweiten Regelungseinrichtung 29 befindliche Schalter 39 geschlossen ist, wird die Wärmeenergiezuführeinrichtung 8 mit elektrischer Energie versorgt (Stromkreis 40 in Fig 6B). Die Regelung der Temperatur der Flüssigkeit im Aufnahmeraum erfolgt dabei über den Schalter 39 der zweiten Regelungseinrichtung 29. Auch wenn ein Fehler in der ersten Regelungseinrichtung 22 auftreten sollte, werden der linke 35 und der rechte Schalter 36 derart geschaltet, dass der Stromkreis 40 vorliegt. Im Fehlerfall der ersten Regelungseinrichtung 22 wird der Energiespeicher 1 somit im Temperaturregelbetrieb betrieben.

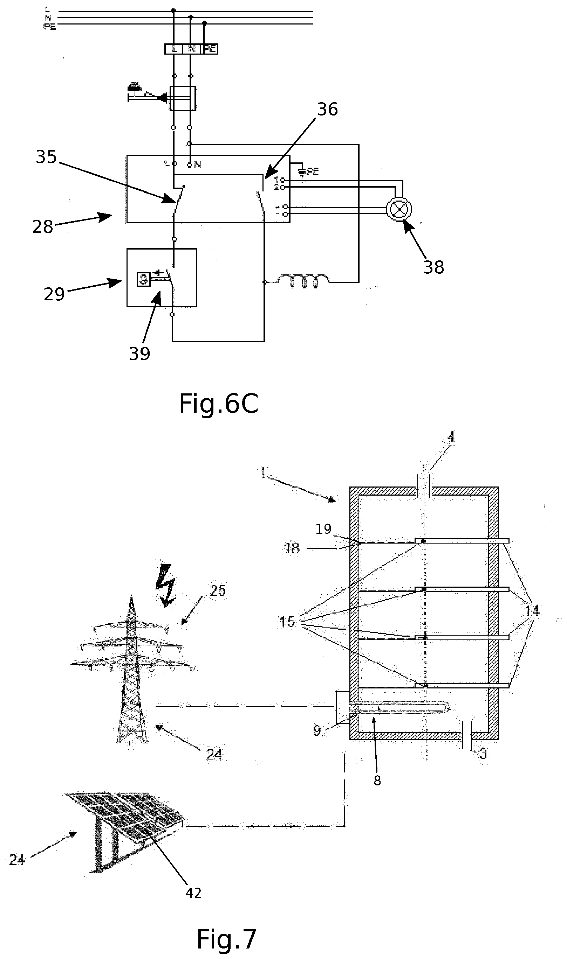

Fig. 6C zeigt die Schaltung der Figuren 6A und 6B ohne verstärkte Linien.

Fig. 7 zeigt eine alternative Ausführungsform des Energiespeichers 1, bei dem die ersten Rohre 14 seitlich in den Aufnahmeraum 5 ragen. Der Energiespeicher 1 kann mit verschiedenen Anwendungen, beispielsweise einer Photovoltaik-Anlage 42 oder einem Energieversorgungsnetz 25, kombiniert werden.

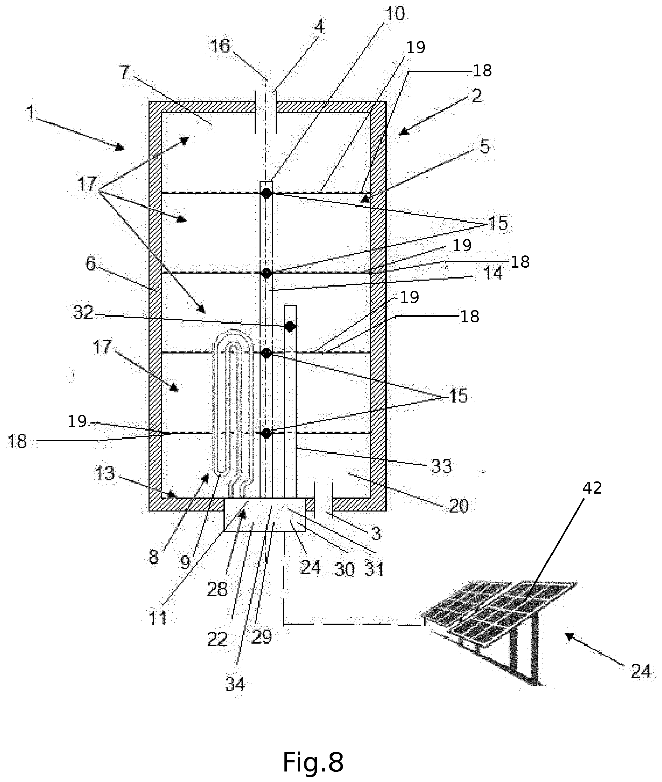

Fig. 8 zeigt den Energiespeicher 1 in Verbindung mit einer Anwendung 24, welche einer Photovoltaik-Anlage 42 entspricht.

## Patentansprüche

1. Verfahren zum Betrieb eines Energiespeichers (1), insbesondere eines Warmwasserspeichers (2), wobei der Energiespeicher (1) einen vorzugsweise wärmeisolierten Aufnahmeraum (5) zur Aufnahme einer Flüssigkeit, eine Zuleitung (3) sowie eine Ableitung (4) für die Flüssigkeit, eine Wärmeenergiezuführeinrichtung (8) und eine Temperaturmesseinrichtung (10) zur Bestimmung der Temperatur der Flüssigkeit aufweist, **dadurch gekennzeichnet, dass** in dem Energiespeicher (1) durch Zuführen von Wärmenergie ein erster Energieinhalt (21) gespeichert und mit Hilfe der Wärmeenergiezuführeinrichtung (8) und einer ersten Regelungseinrichtung (22) gehalten wird und der Energiespeicher (1) einer Anwendung (24) bis zu einer Beladungsgrenze (23) als Energiesenke zur Verfügung gestellt wird.

2. Verfahren nach Anspruch 1, **dadurch gekennzeichnet, dass** der Energiespeicher (1), insbesondere die Wärmeenergiezuführeinrichtung (8), in ein elektrisches Energieversorgungsnetz (25), insbesondere ein Smart-Grid, eingebunden ist und die Anwendung (24) eine Regelungsanwendung zur Kompensation eines Energieungleichgewichts, insbesondere eines Überangebots an Energie, in dem elektrischen Energieversorgungsnetz (25) ist.

3. Verfahren nach Anspruch 1 oder 2, **dadurch gekennzeichnet, dass** ein der Anwendung (24) zur Verfügung gestellter Speicherbereich (60) zumindest der Differenz zwischen der Beladungsgrenze (23) und einem momentanen Gesamtenergiegehalt ($E_{ges}$) entspricht.

4. Verfahren nach einem der Ansprüche 1 bis 3, **dadurch gekennzeichnet, dass** an zumindest einer, vorzugsweise an zumindest zwei, Position/en (12) im Aufnahmeraum (5) eine Temperatur der Flüssigkeit gemessen wird.

5. Verfahren nach einem der Ansprüche 1 bis 4, **dadurch gekennzeichnet, dass** der Aufnahmeraum (5) im Wesentlichen horizontal in zumindest zwei, vorzugsweise zumindest vier, Messzonen (17) mit jeweils einer Zonenuntergrenze (18) und einer Zonenobergrenze (19) geteilt wird und an jeder Zonenuntergrenze (18) jeweils eine Temperatur für die jeweilige Messzone (17) gemessen wird.

6. Verfahren nach Anspruch 5, **dadurch gekennzeichnet, dass** auf Basis der gemessenen Temperaturen für die Messzonen (17) ein Energieinhalt jeder Messzone (17) bestimmt wird und die Energieinhalte der Messzonen (17) zur Bestimmung eines momentanen Gesamtenergieinhalts ($E_{ges}$) des Energiespeichers (1) aufsummiert werden, vorzugsweise wobei die gemessenen Temperaturen, die Energieinhalte der Messzonen (17), der momentane Gesamtenergieinhalt ($E_{ges}$) und/oder ein Beladungspotential an die Anwendung (24) übermittelt wird/werden.

7. Verfahren nach einem der Ansprüche 5 oder 6, **dadurch gekennzeichnet, dass** sich zwischen einem Bodenbereich (13) des Aufnahmeraums (5) und den Messzonen (17) ein Pufferbereich (20) befindet.

8. Verfahren nach einem der Ansprüche 6 oder 7, **dadurch gekennzeichnet, dass** auf Basis eines Zeitverlaufs des Gesamtenergieinhalts ein Energiebeladungsplan für den Energiespeicher (1) erstellt wird, welcher eine Höhe und/oder einen Zeitverlauf des ersten Energieinhalts (21) anpasst.

9. Verfahren zum Betrieb eines Verbunds (27) von mehreren Energiespeichern (1), insbesondere Warmwasserspeichern (2), **dadurch gekennzeichnet, dass** die Energiespeicher (1), insbesondere die Wärmeenergiezuführeinrichtung (8) eines jeden Energiespeichers (1), in einem elektrischen Energieversorgungsnetz (25) eingebunden sind und an jedem Energiespeicher (1) das Verfahren nach einem der vorhergehenden Ansprüche angewandt wird, wobei zur Kompensation eines Überangebots an Energie in dem elektrischen Energieversorgungsnetz (9) die Energiespeicher (1) mit Wärmeenergie geladen werden.

10. Energiespeicher (1), insbesondere Warmwasserspeicher (2), mit einem vorzugsweise wärmeisolierten Aufnahmeraum (5) für eine Flüssigkeit, einer Zuleitung (3) sowie einer Ableitung (4) für die Flüssigkeit, einer Wärmeenergiezuführeinrichtung (8) und einer Temperaturmesseinrichtung (10) zur Bestimmung der Temperatur der Flüssigkeit, **dadurch gekennzeichnet, dass** eine erste Regelungseinrichtung (22) vorgesehen ist, welche dazu eingerichtet ist, mit der Wärmeenergiezuführeinrichtung (8) einen ersten Energieinhalt (21) in dem Energiespeicher (1) zu halten, und der Energiespeicher (1) einer Anwendung bis zu einer Beladungsgrenze (23) als Energiesenke zur Verfügung stellbar ist.

11. Energiespeicher (1) nach Anspruch 10, **dadurch gekennzeichnet, dass** die Temperaturmesseinrichtung (10) zumindest zwei, vorzugsweise zumindest vier, Temperaturmesssensoren (15) aufweist, welche vorzugsweise im Wesentlichen senkrecht in dem Aufnahmeraum (5) angeordnet sind.

12. Energiespeicher nach Anspruch 11, **dadurch gekennzeichnet, dass** die Temperaturmesssensoren (12) in einem insbesondere wasserdicht abgedichteten ersten Rohr (14) angeordnet sind.

13. Energiespeicher (1) nach Anspruch 11 oder 12, **dadurch gekennzeichnet, dass** ein Sicherheitstemperatursensor (32), der vorzugsweise in einem zweiten Rohr (33) angeordnet ist, und eine Sicherheitseinrichtung (34) vorgesehen ist, wobei die Sicherheitseinrichtung (34) die Wärmeenergiezuführeinrichtung (8) deaktiviert, wenn der Sicherheitstemperatursensor (32) einen Temperaturwert oberhalb einer Sicherheitstemperatur misst.

14. Energiespeicher (1) nach einem der Ansprüche 10 bis 13, **dadurch gekennzeichnet, dass** ein Verbindungsmodul (30), insbesondere ein Funkverbindungsmodul (31), vorgesehen ist, welches einen Datenaustausch mit der Anwendung (24) ermöglicht, wobei das Verbindungsmodul (30) vorzugsweise ein GSM-Verbindungsmodul ist und der Datenaustausch mit der Anwendung (24) über ein GSM-Netz erfolgt.

15. Energiespeicher (1) nach einem der Ansprüche 10 bis 14, **dadurch gekennzeichnet, dass** eine zweite Regelungseinrichtung (29) vorgesehen ist, welche dazu eingerichtet ist, eine Temperatur der Flüssigkeit zu regeln, wenn die erste Regelungseinrichtung (22) deaktiviert ist und der Energiespeicher (1) einer Anwendung (24) nicht als Energiesenke zur Verfügung gestellt ist.

Fig.1

Fig.2

Fig.3A

Fig.3B

Fig.4

Fig.5A

Fig.5B

Fig.6A

Fig.6B

Fig.6C

Fig.7

Fig.8

Europäisches
Patentamt

European
Patent Office

Office européen
des brevets

# EUROPÄISCHER RECHERCHENBERICHT

Nummer der Anmeldung

EP 20 20 7337

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 343 128 A1 (VITO NV [BE]) 4. Juli 2018 (2018-07-04) * Absätze [0021] - [0031] - Absätze [0054] - [0068]; Abbildungen 1, 2 * ----- | 1-15 | INV. F24D19/10 F24H1/00 F24H7/00 F24H9/20 F28D20/00 G06Q50/06 |
| A | WO 2012/164102 A2 (VITO [BE]; VANTHOURNOUT KOEN [BE] ET AL.) 6. Dezember 2012 (2012-12-06) * das ganze Dokument * ----- | 1-15 | |
| A | US 9 405 304 B2 (SMITH CORP A O [US]) 2. August 2016 (2016-08-02) * das ganze Dokument * ----- | 1-15 | |
| A | US 2019/277537 A1 (MCCULLOUGH JASON J [US] ET AL) 12. September 2019 (2019-09-12) * das ganze Dokument * ----- | 1-15 | |
| A | WO 2012/038194 A1 (TERAFERO BVBA [BE]; DE GRAEVE WIM [BE]) 29. März 2012 (2012-03-29) * das ganze Dokument * ----- | 1-15 | |

RECHERCHIERTE SACHGEBIETE (IPC)

F24D
F28F
G06Q
F24H
F28D

Der vorliegende Recherchenbericht wurde für alle Patentansprüche erstellt

| Recherchenort | Abschlußdatum der Recherche | Prüfer |
|---|---|---|
| München | 23. März 2021 | Riesen, Jörg |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 20 7337

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2021

| Im Recherchenbericht angeführtes Patentdokument | Datum der Veröffentlichung | Mitglied(er) der Patentfamilie | Datum der Veröffentlichung |
|---|---|---|---|
| EP 3343128 A1 | 04-07-2018 | EP 3343128 A1 | 04-07-2018 |
| | | EP 3563096 A1 | 06-11-2019 |
| | | JP 2020503829 A | 30-01-2020 |
| | | US 2019318281 A1 | 17-10-2019 |
| | | WO 2018122214 A1 | 05-07-2018 |
| WO 2012164102 A2 | 06-12-2012 | DK 2715298 T3 | 24-07-2017 |
| | | DK 3214420 T3 | 11-03-2019 |
| | | EP 2715298 A2 | 09-04-2014 |
| | | EP 3214420 A1 | 06-09-2017 |
| | | ES 2633162 T3 | 19-09-2017 |
| | | ES 2711197 T3 | 30-04-2019 |
| | | JP 6014125 B2 | 25-10-2016 |
| | | JP 2014522475 A | 04-09-2014 |
| | | PL 2715298 T3 | 29-09-2017 |
| | | PL 3214420 T3 | 31-05-2019 |
| | | PT 2715298 T | 10-07-2017 |
| | | US 2014190680 A1 | 10-07-2014 |
| | | WO 2012164102 A2 | 06-12-2012 |
| US 9405304 B2 | 02-08-2016 | CA 2844196 A1 | 15-09-2014 |
| | | CA 3081516 A1 | 15-09-2014 |
| | | US 2014277816 A1 | 18-09-2014 |
| | | US 2016320095 A1 | 03-11-2016 |
| US 2019277537 A1 | 12-09-2019 | KEINE | |
| WO 2012038194 A1 | 29-03-2012 | AU 2011304617 A1 | 07-03-2013 |
| | | CA 2809442 A1 | 29-03-2012 |
| | | CN 103190050 A | 03-07-2013 |
| | | EP 2609664 A1 | 03-07-2013 |
| | | JP 2013545148 A | 19-12-2013 |
| | | RU 2013110461 A | 10-10-2014 |
| | | US 2013178992 A1 | 11-07-2013 |
| | | WO 2012038194 A1 | 29-03-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013124302 A2
- DE 102012212040 A1
- WO 2011058383 A2